**Europäisches Patentamt**

(19) **European Patent Office**

**Office européen des brevets**

(11) Publication number: **0 171 295**
**B1**

(12) **EUROPEAN PATENT SPECIFICATION**

(45) Date of publication of patent specification: **07.03.90**

(51) Int. Cl.⁵: **G 01 G 19/32**, G 01 G 17/02

(21) Application number: **85305680.2**

(22) Date of filing: **09.08.85**

(54) Weighing apparatus.

(30) Priority: **09.08.84 JP 166685/84**
**09.08.84 JP 166686/84**
**09.08.84 JP 166687/84**
**09.08.84 JP 166688/84**

(43) Date of publication of application:
**12.02.86 Bulletin 86/07**

(45) Publication of the grant of the patent:
**07.03.90 Bulletin 90/10**

(84) Designated Contracting States:
**DE FR GB IT**

(56) References cited:
**EP-A-0 079 237**
**EP-A-0 097 531**
**EP-A-0 097 532**
**EP-A-0 114 745**
**EP-A-0 977 531**
**FR-A-2 399 012**
**GB-A-2 097 207**
**US-A-4 313 507**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Nakagawa, Yukio Imperial**
**Higashiokazaki 203**
**32 Okazaki Higashitennou-cho Sakyo-ku**
**Kyoto-shi Kyoto (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to a weighing apparatus for weighing elongate articles such as dried noodle strings, for example.

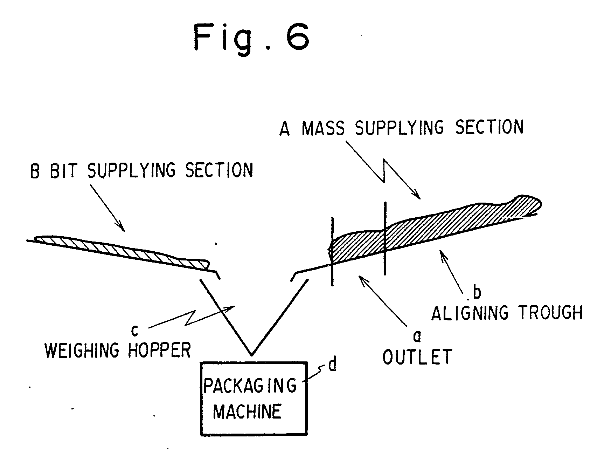

Elongate articles such as dried macaroni, spaghetti, and dried noodle strings have heretofore been weighed and packaged by a weighing apparatus as shown in Fig. 6 of the accompanying drawings. A relatively large quantity of elongate articles to be weighed, having a total weight which is approximately 90% of a preset target weight, is supplied by a mass supplying section A to a weighing hopper $c$, and then further articles, having a total weight which is approximately 10% of the preset target weight, are supplied from a bit supplying section B to the weighing hopper $c$. When the sum of the weights of the articles supplied is equal to the preset target weight, the articles are delivered from the weighing hopper $c$ to a packaging machine $d$ in which they are packaged.

Since the articles are supplied from both of the mass and bit supplying sections A, B, it has been time-consuming to weigh the articles, and hence the weighing apparatus has a limited processing capability. With about 90% of the target weight supplied from the mass supplying section A, a constant quantity of articles have to be discharged from an outlet $a$, requiring a long aligning trough $b$ which has made the weighing apparatus large in size.

With a view to reducing the size of the weighing apparatus, the present applicants have proposed in EP—A—0097532 a weighing apparatus, particularly suited for weighing out large volumes of articles, comprising a plurality of weighing machines, a group of which is employed in a first combinatorial weighing operation to weigh out a first quantity of articles weighing less than a preselected target weight. When the first quantity has been weighed out, a second combinatorial weighing operation is performed using the remaining weighing machines of the plurality, or all of the weighing machines thereof, to weigh out a second quantity of articles which is substantially equal in weight to the weight difference between the preselected target weight and the weight of the first quantity. The first and second quantities of articles are then brought together to form a batch of articles having substantially the preselected target weight.

Similar apparatus is proposed in FR—A—2399012, the proposed apparatus differing from that disclosed in EP—A—0097532 essentially in that the first quantity of articles is not weighed out by means of a combinatorial weighing operation. However, the apparatuses proposed in EP—A—0097532 and FR—A—2399012 take no account of the problems which can occur if the combinatorial weighing operation performed to obtain the second quantity of articles cannot provide a second quantity acceptably close in weight to the weight difference.

According to the present invention there is provided a weighing apparatus for carrying out a weighing cycle repeatedly, to provide respective selected batches of articles, which apparatus comprises:

a primary weighing machine for weighing out a first quantity of articles such that that quantity has a weight less than a preselected target weight;

discharge means for bringing about discharge of the said first quantity from the said weighing machine;

control means, connected to the said primary weighing machine and to the said discharge means, for calculating the weight difference between the said preselected target weight and the weight of the said first quantity; and

a plurality of secondary weighing machines, connected to the said control means, for holding respective quantities of articles to be weighed;

the said control means being operable to combine respective quantity weight values provided by the secondary weighing machines to find an acceptable combination of secondary weighing machines holding a total combined weight of articles equal to the calculated weight difference, or closest to that weight difference within preset allowable limits, and the said discharge means being operable to bring about discharge of the articles held by the secondary weighing machines of the acceptable combination thereby to form a second quantity of articles, the said first and second quantities of articles being brought together by the said discharge means so as to form such a selected batch of articles having substantially the preselected target weight;

characterised in that the said discharge means are operable to discharge articles via either a selection discharge path or a rejection discharge path, the said control means being operable, if such an acceptable combination cannot be found, to reject the said first quantity of articles discharged from the said primary weighing machine and to cause the rejected quantity to be discharged by the said discharge means via the said rejection discharge path thereof.

Thus, if the combinatorial weighing operation performed by the control means fails to find an acceptable combination of secondary weighing machines holding a total combined weight of articles equal to the calculated weight difference, or closest to that weight difference within preset allowable limits, discharge of articles from the secondary weighing machines is inhibited, and the articles already discharged from the primary weighing machine are rejected and so are not packaged. Thus, batches of articles can be weighed out successively without the need to stop the operation of the apparatus, which can result in an increased degree of weighing efficiency.

Reference will now be made, by way of example, to the accompanying drawings, in which:—

Fig. 1 is a schematic view of a weighing apparatus embodying the present invention;

Fig. 2 is a block diagram of the weighing apparatus embodying the invention;

Fig. 3 is a diagram showing memories;

Figs. 4(a), 4(b) and 4(c) are a flowchart of operation of the weighing apparatus;

Fig. 5 is a flowchart of a process for automatically adjusting the width of a primary shutter; and

Fig. 6 is a schematic view of a conventional weighing apparatus.

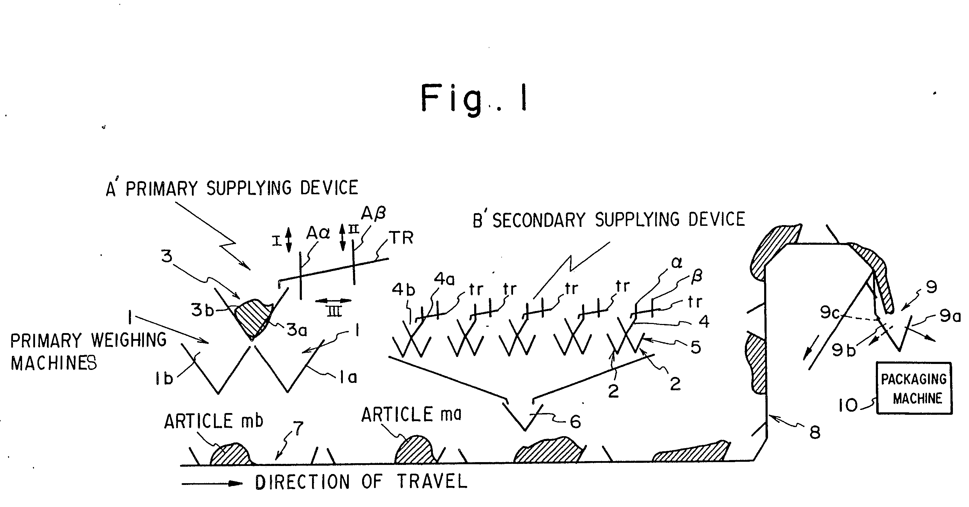

Fig. 1 schematically shows a weighing apparatus embodying the present invention. The weighing apparatus has a primary supply device A' having a single elongate primary trough TR provided with primary shutters Aα, Aβ, movable vertically in the directions of the arrows I, II, for supplying elongate articles, such as spaghetti strings, to a primary pool hopper 3. The primary pool hopper 3 has gates 3a, 3b which may be opened alternately for supplying elongate articles to respective primary weighing hoppers 1a, 1b situated therebelow. The primary shutter Aα is also movable horizontally in the directions of the arrow III in order to vary the shutter width, i.e. the distance between the primary shutters Aα, Aβ. The said primary weighing hoppers 1a, 1b belong to respective primary weighing machines 1 which are disposed below the primary pool hopper 3 for receiving articles from the gates 3a, 3b thereof, respectively. In addition to a single primary weighing hopper 1a or 1b, each of the primary weighing machines 1 comprises a single weight sensor (not shown). Quantities of articles ma, mb weighed out respectively by the primary weighing machines 1 are discharged at a first discharge region from respective primary hoppers 1a, 1b into respective buckets 7 and delivered by a bucket conveyor 8 to a second discharge region, located downstream of the primary supplying device A' in the direction of travel of the bucket conveyor 8.

In this embodiment there are five secondary supplying devices B' at the second discharge region, each having an elongate trough tr provided with secondary shutters α, β movable vertically, for supplying elongate articles, such as spaghetti strings, to respective secondary pool hoppers 4. Each secondary pool hopper 4 has a pair of gates 4a, 4b which may be opened alternately so as to supply articles to respective secondary weighing hoppers 5, belonging to respective secondary weighing machines 2. Each secondary weighing machine 2 further comprises a single weight sensor (not shown). Thus, in this embodiment there are ten secondary weighing machines 2.

Respective quantities of articles to be weighed, the weights of which quantities are substantially equal to one another and are smaller than a preset target weight, are supplied to the primary weighing machines 1. The weights of the respective quantities are determined by the machines 1 and a weight shortage of each batch of articles, with respect to the preset target weight, is made up by a further quantity of articles supplied by the secondary weighing machines 2. In this respect, the ten secondary weighing machines 2 effect a combinatorial weighing operation in order to select a further quantity of articles which has a total weight closest to the weight shortage. The articles forming the selected quantity are discharged from the secondary weighing hoppers 5 concerned into a timing hopper 6. When the quantity of articles ma, for example, weighed out by one of the primary weighing machines 1 and discharged into one of the buckets 7 reaches a position below the timing hopper 6, the timing hopper 6 is opened to discharge the further quantity of articles therein into that bucket 7. The batch of articles, formed by the combined quantities, is then delivered by the bucket conveyor 8 to a distribution hopper 9. If the weight of the batch of articles in the bucket 7 is acceptable in view of the preset target weight, then a first gate 9a of the distribution hopper 9 is opened to supply the selected batch to a packaging machine 10 in which it is packaged. If the weight of the batch of articles in the bucket 7 is not acceptable, then a second gate 9b of the distribution hopper 9 is opened to reject the batch.

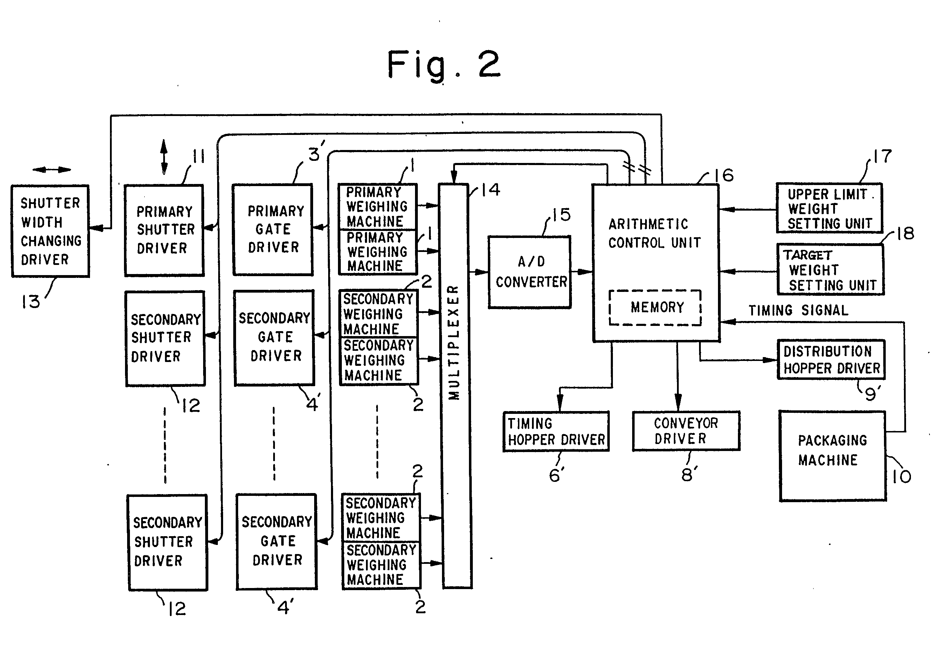

Operation of the apparatus of Fig. 1 will now be described with reference to Fig. 2 which shows the weighing apparatus embodying the present invention in a block form. An arithmetic control unit 16, comprising a microcomputer for example, issues a signal for actuating a primary shutter driver 11 to drive the primary shutters Aα, Aβ for supplying articles to the primary pool hopper 3. Then, the arithmetic control unit 16 issues a signal to actuate a primary gate driver 3' for opening one of the gates 3a, 3b of the primary pool hopper 3 to supply a quantity of articles to the corresponding one of the primary weighing hoppers 1a, 1b which then weighs the quantity. When a timing signal is fed from the packaging machine 10 to the arithmetic control unit 16, the weight value measured by the primary weighing machine 1 is fed, via a multiplexer 14 and an A/D converter 15, to the arithmetic control unit 16 for storage therein in a prescribed area of a memory thereof. In addition, the arithmetic control unit 16 issues a switching signal to the multiplexer 14 to cause the weight values measured by the secondary weighing machines 2 to be read in successively, the weight values being delivered through the A/D converter 15 to the arithmetic control unit 16 for storage therein in prescribed areas of the memory. The arithmetic control unit 16 computes a combinatorial target weight for the total quantity of articles to be discharged from the secondary weighing machines 2 on the basis of a preset target weight set by a target weight setting unit 18 and the weight value provided by the primary weighing machine 1, and then employs the weight values provided by the secondary weighing machines 2 to effect a combinatorial weighing operation. An upper limit weight deviation from the preset target weight is set by an upper limit weight setting unit 17. For example, if the target weight is 500 g and the upper limit weight is 505 g, then a deviation of 5 g is set in the upper limit weight setting unit 17. The upper limit weight deviation is supplied in advance to the arithmetic control unit 16 is from the upper limit weight setting unit 17. The arithmetic control unit 16 then combines the weight values provided by the secondary weighing machines 2 to select, as an acceptable combination, a combination of secondary weighing machines 2 holding a total weight of articles equal to the combinatorial target weight within the upper limit weight deviation, or closest to that weight.

In selecting an acceptable combination, those secondary weighing machines 2 which are paired together and supplied with respective quantities of articles from the same secondary pool hopper 4 and which are selected as giving an acceptable combination, are precluded from the combinatorial weighing operation, and the paired secondary weighing machines among the remaining secondary weighing machines are excluded from the combinatorial weighing operation. Therefore, the paired secondary weighing machines are prevented from discharging the articles at the same time. When there are no paired secondary weighing machines selected as giving an accept-. able combination in the preceding weighing cycle, the two secondary weighing machines in each pair do not participate simultaneously in the combinatorial weighing operation, and only the two secondary weighing machines in one pair participate simultaneously in the combinatorial weighing operation in the present weighing cycle. This process performs zero-point adjustment for one of the paired secondary weighing machines which has discharged its contents, so that zero-point adjustment can be effected uniformly on all of the secondary weighing machines, not on certain secondary weighing machines. When an acceptable combination has been found, the quantities of articles held by those secondary weighing machines 2 belonging to the selected acceptable combination are discharged into the timing hopper 6. The arithmetic control unit 16 detects when the bucket 7, which has been supplied with a quantity of articles weighed out by the primary weighing machine and is delivered by the bucket conveyor 8, reaches a position below the timing hopper 6, and then issues a signal to a timing hopper driver 6' to bring about discharge of the articles in the timing hopper 6 into the bucket 7.

The batch of articles thus collected in the bucket 7 is discharged into the distribution hopper 9. If the weight of the batch of articles in the bucket 7 is acceptable, then a signal for bringing about opening of the first gate 9a is fed from the arithmetic control unit 16 to a distribution hopper driver 9'. If the weight of the batch of articles in the bucket 7 is not acceptable, then a signal for bringing about opening of the second gate 9b is fed from the arithmetic control unit 16 to the distribution hopper driver 9'. The batch of articles discharged through the first gate 9a is packaged by the packaging machine 10, and the articles discharged from the second gate 9b are returned to the primary supplying device A' or the secondary supplying device B'.

A conveyor driver 8' is controlled by a signal from the arithmetic control unit 16 to feed the bucket conveyor 8 intermittently at a prescribed speed.

The secondary gates 4a, 4b are actuated by a secondary gate driver 4', the secondary shutters α, β are actuated by a secondary shutter driver 12, and the shutter width is varied by a shutter width changing driver 13.

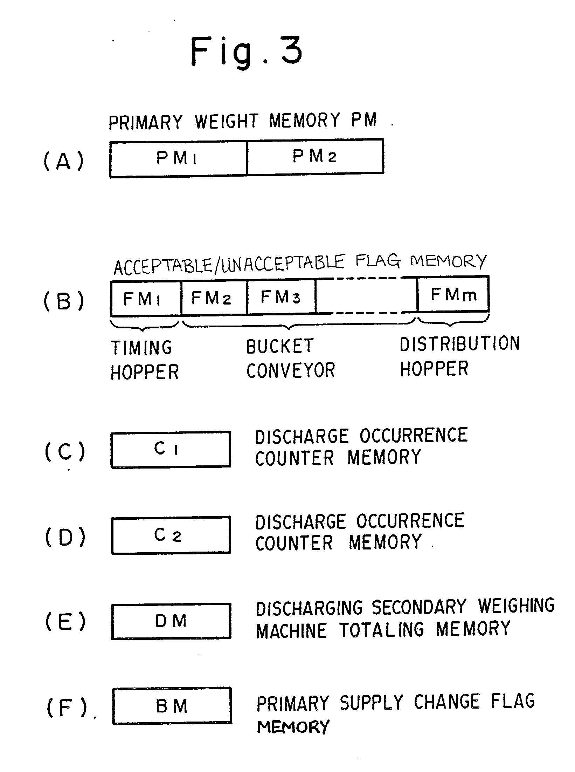

Fig. 3 shows the memory in the arithmetic control unit 16 in greater detail. Fig. 3(A) illustrates a primary weight memory PM for storing the weight values measured by the primary weighing machines 1. The primary weight memory PM comprises an area PM1 for storing the weight value of a quantity of articles discharged in a present cycle from the primary weighing hopper 1a or 1b, and an area PM2 for storing the weight value of a quantity of articles discharged in a preceding cycle from one of the primary weighing hoppers. Fig. 3(B) shows an acceptable/unacceptable memory FM for storing data indicative of whether an acceptable combination or an unacceptable combination is obtained as a result of a combinatorial weighing operation effected by the secondary weighing machines 2. The acceptable/unacceptable flag memory FM comprises: an area FM1 for storing data indicative of whether the quantity of articles discharged from the timing hopper 6 has an acceptable or an unacceptable weight; areas FM2, FM3, ... for storing data indicative of whether the batches of articles in the respective buckets 7 delivered by the bucket conveyor 8 have accpetable or unacceptable weights; and an area FMm for storing data indicative of whether the batch of articles discharged into the distribution hopper 9 has an acceptable or an unacceptable weight. Figs. 3(C) and 3(D) are illustrative of discharge occurrence counter memories C1 and C2, respectively, for counting the number of discharges from the secondary weighing machines 2 which occur. Fig. 3(E) shows a memory for counting the total number of secondary weighing machines 2 having discharged their articles. Fig. 3(F) is a primary supply change flag memory for storing a primary supply charge flag BM for the primary weighing machines 1 as described later on.

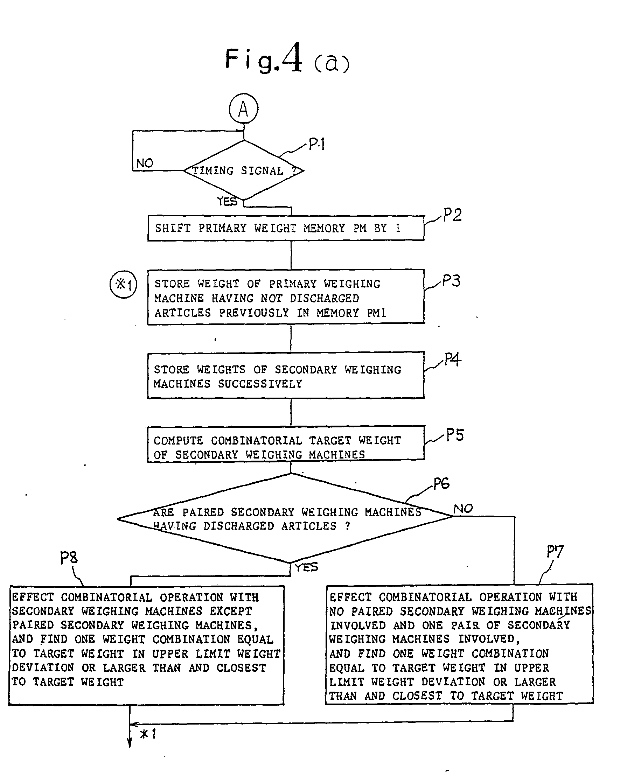

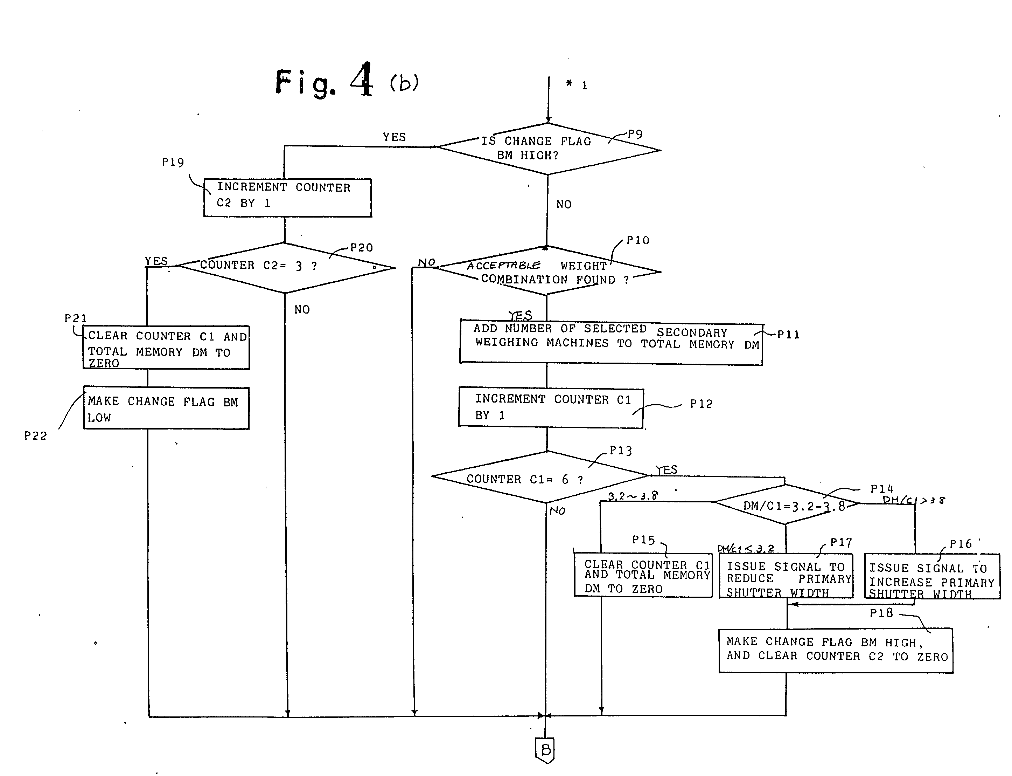

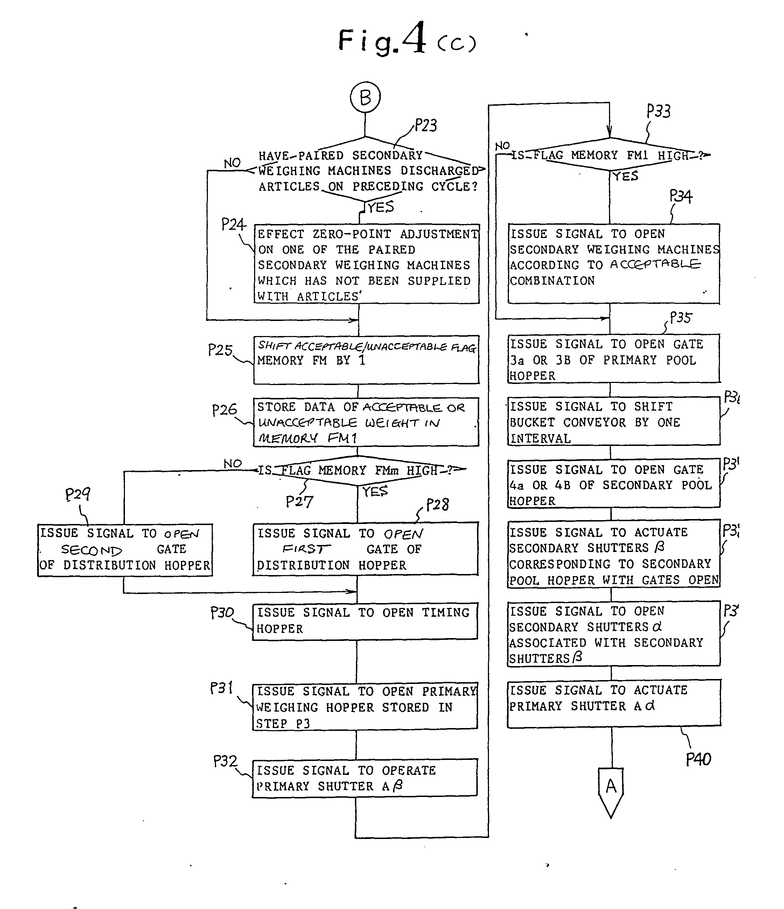

Operation of the weighing apparatus will be described with reference to the flowchart of Fig. 4.

(1) When a timing signal from the packaging machine 10 is confirmed in a step P1, the data in the primary weight memory PM is shifted by 1 in a step P2. This means that if the weight of the batch of articles discharged from the primary weighing hopper 1a in the previous weighing cycle is stored in the memory area PM1, then the stored weight is shifted from the memory area PM1 to the memory area PM2. Then, the weight of the batch of articles in the primary weighing machines from which they have not been discharged in the previous cycle, i.e. the batch of articles in the primary weighing machine having the primary weighing hopper 1b, is stored in the memory area PM1 in a step P3.

(2) Thereafter, the weight values provided by the secondary weighing machines 2 are successively stored in memory areas (not shown in Fig. 3) in a step P4. The arithmetic control unit 16 determines a combinatorial target weight for the combinatorial weighing operation to be carried out by the secondary weighing machines 2 by subtracting the weight value stored in the primary weight memory PM2, i.e. the weight of the batch of articles discharged from the primary weighing machine 1 in the previous cycle, from the target weight preset by the target weight setting unit 18 in a step P5. Then, the arithmetic control unit 16 checks whether quantities of articles were discharged from both secondary weighing machines 2 of a pair in the preceding cycle in a step P6. If not, then a combinatorial weighing operation in which both secondary weighing machines 2 of a pair are not simultaneously involved, and a combinatorial weighing operation in which both secondary weighing machines 2 of only one pair are simultaneously involved, is carried out to select an acceptable combination of secondary weighing machines 2 holding a total combined weight of articles equal to the combinatorial target weight within the upper limit weight deviation, or greater than and closest to the combinatorial target weight, in a step P7. If quantities of articles were discharged from both secondary weighing machines 2 of a pair in the preceding cycle, then a combinatorial weighing operation is effected among the secondary weighing machines 2 other than the secondary weighing machines 2 of the pair concerned to select an acceptable combination of secondary weighing machines 2 holding a total combined weight of articles equal to the combinatorial target weight within the upper limit weight deviation, or greater than and closest to the combinatorial target weight, in a step P8. Subsequently, the arithmetic control unit 16 checks whether the primary supply changing flag BM is high or not in a step P9. Since the amount of articles discharged from the primary weighing machines is not changed at this stage, the arithmetic control unit 16 goes on to a step P10 to check if an acceptable combination has been found.

(3) If an acceptable combination has been determined, then the number of secondary weighing machines 2 belonging to the selected acceptable combination is found and stored in the total memory DM in a step P11. Then, the discharge occurrence memory C1 is incremented by 1 in a step P12. A step P13 checks if the count of the counter C1 has reached a prescribed number, such as "6". If not, then the steps following B (in Figure 4(b) and (c)) are repeated until the prescribed number is reached by the counter C1. If the count of the counter C1 has reached the prescribed number, then a step P14 determines whether the value of DM/C1, which is obtained by dividing the value of the total memory DM by the count of the counter C1, is within a prescribed range such as from 3.2 to 3.8. The range from 3.2 to 3.8 is selected because experience indicates that if there are ten secondary weighing machines and combinatorial weighing operations are effected with no paired secondary weighing machines involved and with the two secondary weighing machines in only one pair involved, then the maximum number of secondary weighing machines capable of discharging their articles ranges from 5 to 6, and the best combinatorial weighing accuracy can be attained when the articles are discharged from approximately half of those secondary weighing machines, i.e. 3 or 4 secondary weighing machines. Therefore, the step P14 checks if the average number of secondary weighing machines which have discharged the articles, or have been selected, per a predetermined number, for example 6, falls within the range 3.2 to 3.8. If the value of DM/C1 falls in the range from 3.2 to 3.8, then the counter C1 and the total memory DM are cleared to zero in a step P15, and the arithmetic control unit 16 proceeds to B (Fig. 4(b) and (c)). If the value of DM/C1 is smaller than 3.2, then the average number of selected secondary weighing machines 2 is judged as being small. In this case, a signal for causing the primary shutter width of the primary supplying device A' to be reduced is issued to the shutter width changing driver 13 in a step P17 to reduce the interval between the primary shutters Aα, Aβ by one pitch, thereby to reduce the quantity of articles that can be supplied. The number of secondary weighing machines 2 which can be selected is therefore increased, and the primary supply change flag BM is caused to go high, whereupon the discharge occurrence counter memory C2 is cleared to zero in a step P18. The discharge occurrence counter memory C2 serves as a memory for storing the number of discharge occurrences until the quantity of articles in the primary pool hopper and the primary weighing hoppers are discharged. If the value of DM/C1 is greater than 3.8, then a signal for causing the primary shutter width to be increased is issued in a step P16, whereupon the primary supply change flag BM is caused to go high and the discharge occurrence counter memory C2 is cleared to zero in the step P18.

(4) If the change flag BM is high in the step P9, i.e. then step P18 has been performed, then the count of the counter memory C2 is incremented by 1 in a step P19. Then the arithmetic control unit 16 checks whether the count in the counter memory C2 has reached "3" in a step P20, in order to prevent the total memory DM from being incremented until the articles are completely discharged from the primary pool hopper 3 and the primary weighing hoppers 1a, 1b, which were supplied through the shutter width before it was changed (or until the articles are weighed three times). When the count of the counter memory C2 reaches "3", the counter C1 and the total memory DM are cleared to zero in a step P21, and the change flag BM is made low in a step P22.

(5) A step P23 checks whether both secondary weighing machines 2 of a pair have simultaneously discharged articles in the previous cycle. If there were such paired secondary weighing machines in the previous cycle, then zero-point adjustment is performed in a step P24 on one of the paired secondary weighing machines which has not been supplied with articles (owing to the fact that in one weighing cycle the secondary pool hopper 4 discharges articles into the weighing hopper of only one of the paired secondary weighing machines 2 corresponding to that pool hopper, so that, if both weighing hoppers discharged their articles, the weighing hopper of the other secondary weighing machine 2 remains empty). Then the acceptable/unacceptable flag memory FM is shifted by 1 as a whole in a step P25, and the data indicating whether the weight is acceptable or not as a result of the combinatorial weighing operation is stored in the memory area FM1 in a step P26. Specifically, if an acceptable combination is obtained, then a high signal is stored in the memory area FM1, and if an unacceptable combination is obtained, then a low signal is stored in the memory area FM1. Then, the arithmetic control unit 16 determines whether the flag memory FMm is high or not, i.e. whether the batch of articles in the distribution hopper 9 has an acceptable or an unacceptable weight in a step P27. If the flag memory FMm is high, then a signal for causing the first gate 9a of the distribution hopper 9 to be opened is issued in a step P28, and if the flag memory FMm is not high, then a signal for causing the second gate 9b of the distribution hopper 9 to be opened is issued in a step P29.

(6) Then, a timing hopper opening signal is issued in a step P30, and a signal for opening that primary weighing hopper 1a or 1b of the primary weighing machine 1, the quantity weight value of which has been stored in the step P3 (*1), is issued in a step P31 to cause the quantity of articles held by that weighing hopper 1a or 1b to be discharged into the bucket 7. Thereafter, a signal for operating the primary shutter Aβ is issued in a step P32 to cause the primary shutter Aβ to move vertically, thereby to allow fresh articles to be released into the space between the primary shutters Aα, Aβ. The arithmetic control unit 16 then checks whether the flag memory FM1 is high or not in a step P33. If FM1 is low, then the combination is not acceptable, and the secondary weighing hoppers are not opened, and the bucket 7 supplied only with the articles from one of the primary weighing machine 1 is delivered in a step-wise fashion towards the distribution hopper 9 whenever a shift signal is applied to the conveyor driver 8′. If FM1 is high, then the weight is acceptable, and a secondary weighing hopper opening signal is issued according to the acceptable combination in a step P34 to cause the secondary weighing hoppers 2 belonging to the acceptable combination to discharge their quantities of articles into the timing hopper 6. A signal is then issued for causing the gate 3a or 3b of the primary pool hopper 3 corresponding to the primary weighing hopper 1a or 1b which has discharged its quantity of articles in a step P35 to be opened, thereby to discharge the articles in the primary pool hopper 3 into the primary weighing hopper 1a or 1b. Thereafter, a signal is issued in a step P36 for causing the bucket conveyor 8 to be shifted by one interval, and a signal is issued causing respective gates 4a or 4b of the secondary pool hoppers 4 corresponding to the secondary weighing hoppers 5 which have discharged their quantities of articles in a step P37 to be opened, thereby to discharge the articles held by those secondary pool hoppers 4 into the corresponding secondary weighing hoppers 5. A signal is issued in a step P38 for causing those secondary shutters β of the secondary supplying device B′ which correspond to the secondary pool hoppers having their gates 4a or 4b open to move vertically so as to allow articles into the interval between the secondary shutters β, α. Then, a signal for operating the secondary shutters α associated with the actuated secondary shutters β is issued in a step P39 to supply those articles which are between the shutters β, α from the secondary supplying device B′ into the pool hoppers 4. Finally, a signal for actuating the primary shutter Aα is issued to supply those articles which are between the primary shutters Aβ, Aα from the primary supplying device A′ into the primary pool hopper 3 in a step P40. Then, control goes back to A. In the above embodiment, the shutter width of the primary supply device is adjusted to control the quantity of articles supplied to the primary weighing machines in order that the number of secondary weighing machines having discharged articles falls in a prescribed range. However, it is also possible to keep constant the quantity of articles supplied to and hence from the primary weighing machines, and to control the shutter width of the secondary supplying device with the shutter width changing driver 13 in order that the number of secondary weighing machines having discharged articles falls in a prescribed range.

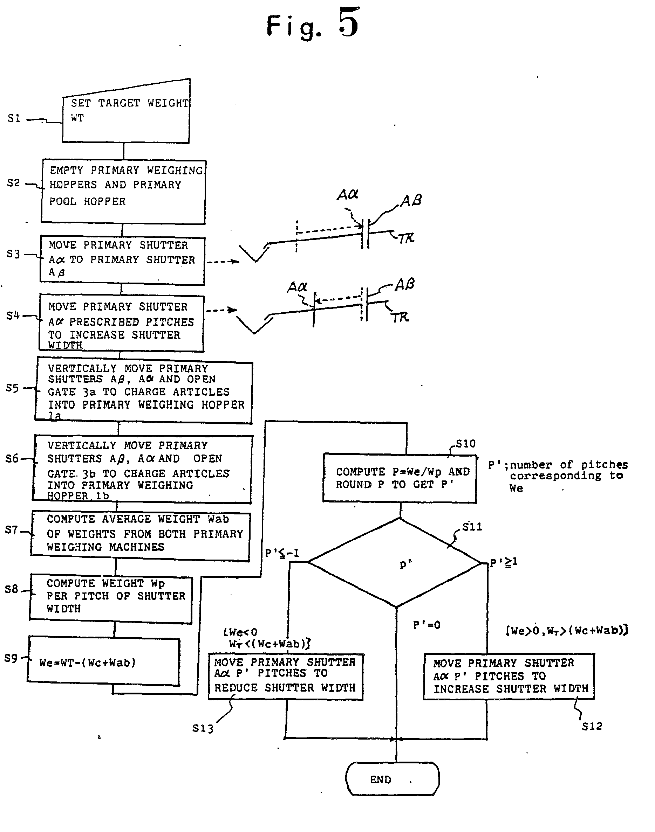

When a target weight is newly set or the preset target weight is changed, the quantity of articles supplied to the primary weighing machines will be automatically adjusted according to the preset target weight. Such automatic adjustment will be described with reference to the flowchart of Fig. 5. In Fig. 5, a target weight is newly set, and the primary shutter width is automatically adjusted according to the new setting of the target weight.

(1) A target weight WT is set by the target weight setting unit 18 in a step S1. Then, with no articles present between the primary shutters Aα, Aβ, the primary weighing hoppers 1a, 1b and the primary pool hopper 3 are opened to empty those hoppers in a step S2. Thereafter, the primary shutter Aα is moved to the primary shutter Aβ in a step S3 as shown in Fig. 5 to determine a reference position, followed by moving the primary shutter Aα prescribed pitches in the direction to increase the shutter width in a step S4.

(2) The primary shutter Aβ is first moved vertically to supply articles between the primary

shutters Aβ, Aα, and then the primary shutter Aα is moved vertically to supply the articles from between the primary shutters Aβ, Aα into the primary pool hopper 3, the gate 3a of which is opened to charge the articles into the primary weighing hopper 1a in a step S5. Likewise, the primary shutters Aα, Aβ are successively moved vertically to supply the articles into the primary pool hopper 3, the gate 3b of which is opened to charge the articles into the primary weighing hopper 1b in a step S6. Then, the data on the weights from both the primary weighing machines 1 are supplied to compute the average weight Wab in a step S7.

(3) Then, the weight Wp per pitch of the shutter width is determined by:

$$Wp = (Wab/\text{the number of pitches of shutter width})$$

The deviation weight We is determined in a step S9 by:

$$We = WT - (Wc + Wab)$$

where Wc is the prescribed weight to be measured by a prescribed number (3 or 4 for example) of secondary weighing machines. More specifically, the deviation weight We indicates the difference between the target weight WT and the weight which is the sum of the weight of the articles from the prescribed number of secondary weighing machines 2 and the average weight of the articles from the primary weighing machines 1 which have been supplied through the present primary shutter width (having the pitches in the step S4). The primary shutter width is adjusted in the successive steps (below) in order to eliminate or nearly eliminate the deviation weight We. P=(We/Wp) is computed from the weights We, Wp as defined above, and a value P′ is obtained by rounding the value P to an integer in a step S10. The value P′ corresponds to the number of pitches of the shutter width corresponding to We.

(4) The value P′ is checked in a step S11. If P′≧1, then We>0 and WT>(Wc+Wab). At this time, the primary shutter Aα is moved P′ pitches in the direction to increase the shutter width in a step S12. If P′≦−1, then We<0 and WT<(Wc+Wab). At this time, the primary shutter Aα is moved P′ pitches in the direction to reduce the shutter width in a step S13. The primary shutter width is not varied if P′=0.

Although a certain preferred embodiment has been shown and described, it should be understood that many changes and modifications may be made therein without departing from the scope of the appended claims.

## Claims

1. Weighing apparatus for carrying out a weighing cycle repeatedly, to provide respective selected batches of articles, which apparatus comprises:

a primary weighing machine (1) for weighing out a first quantity of articles such that that quantity has a weight less than a preselected target weight;

discharge means (6 to 9) for bringing about discharge of the said first quantity from the said primary weighing machine (1);

control means (16), connected to the said primary weighing machine (1) and to the said discharge means (6 to 9), for calculating the weight difference between the said preselected target weight and the weight of the said first quantity; and

a plurality of secondary weighing machines (2), connected to the said control means (16), for holding respective quantities of articles to be weighed;

the said control means (16) being operable to combine respective quantity weight values provided by the said secondary weighing machines (2) to find an acceptable combination of secondary weighing machines (2) holding a total combined weight of articles equal to the calculated weight difference, or closest to that weight difference within preset allowable limits, and the said discharge means (6 to 9) being operable to bring about discharge of the articles held by the secondary weighing machines (2) of the acceptable combination thereby to form a second quantity of articles, the said first and second quantities of articles being brought together by the said discharge means (6 to 9) so as to form such a selected batch of artices having substantially the preselected target weight;

characterised in that the said discharge means (6 to 9) are operable to discharge articles via either a selection discharge path (9a) or a rejection discharge path (9b), the said control means (16) being operable, if such an acceptable combination cannot be found, to reject the said first quantity of articles discharged from the said primary weighing machine (1) and to cause the rejected quantity to be discharged by the said discharge means (6 to 9) via the said rejection discharge path (9b) thereof.

2. Apparatus as claimed in claim 1, wherein the said rejected quantity of articles is returned to supply means (A′, B′) of the apparatus for supplying articles to the said primary weighing machine (1) and the said plurality of secondary weighing machines (2).

3. Apparatus as claimed in claim 1 or 2, further comprising another primary weighing machine (1), arranged adjacent to the primary weighing machine of claim 1, and a primary pool hopper (3) arranged so as to be capable of supplying respective quantities of articles to be weighed to the said primary weighing machines (1) alternately, and further comprising also a plurality of secondary pool hoppers (4), equal in number to half the plurality of secondary weighing machines (2), each secondary pool hopper (4) being arranged so as to be capable of supplying respective quantities of articles alternately to the secondary weighing machines (2) of a corresponding pair of such weighing machines.

4. Apparatus as claimed in claim 3, wherein the said control means (16) are operable to ensure that each acceptable combination comprises only one secondary weighing machine (2) of each pair.

5. Apparatus as claimed in claim 3, wherein the said control means (16) are operable to determine whether both secondary weighing machines (2) in a pair participated in the acceptable combination found in a weighing cycle and to bring about zero-point adjustment of one of the secondary weighing machines (2) of that pair in the next weighing cycle while the other weighing machine (2) of that pair is used in the selection of an acceptable combination.

6. Apparatus as claimed in any preceding claim, wherein the said control means (16) are operable to ensure that the number of secondary weighing machines (2) in each acceptable combination falls within a preselected number range.

7. Apparatus as claimed in claim 6, wherein the said control means (16) are operable to ensure that the number of secondary weighing machines (2) in each acceptable combination is equal to substantially half the number of secondary weighing machines (2) from which that combination was selected.

8. Apparatus as claimed in any preceding claim, wherein the control means (16) are operable to ensure that a substantially constant quantity of articles is supplied to the or each primary weighing machine (1) for weighing out thereby, and are further operable to control the supply of articles to the said plurality of secondary weighing machines (2) in such a way that the number of secondary weighing machines (2) which participate in acceptable combinations falls within a further preselected number range.

9. Apparatus as claimed in any preceding claim, wherein the said control means (16) are operable, over a predetermined number of weighing cycles, to count the total number of secondary weighing machines (2) which have participated in acceptable combinations thereby to determine the average number of secondary weighing machines (2) having participated in acceptable combinations, in the said predetermined number of weighing cycles, and to control the supply of articles to the or each primary weighing machine (1) in dependence upon that average number.

10. Apparatus as claimed in any preceding claim, further comprising target weight setting means (18), connected to the said control means (16), whereby the said target weight may be adjusted, wherein the said control means (16) are operable to control the supply of articles to the or each primary weighing machine (1) in dependence upon the prevailing target weight.

**Patentansprüche**

1. Wägevorrichtung zum wiederholten Durchführen eines Wägezyklus, um jeweilige ausgewählte Artikelchargen zu liefern, mit:

—einer primären Wägemaschine (1) zum Auswägen einer ersten Artikelmenge, derart, daß das Gewicht dieser Menge geringer ist als ein vorgewähltes Zielgewicht;

—Ausgabemitteln (6 bis 9) zum Veranlassen der Ausgabe der ersten Menge aus der primären Wägemaschine (1);

—mit der primären Wägemaschine (1) und den Ausgabemitteln (6 bis 9) verbundenen Steuermitteln (16) zum Berechnen der Gewichtsdifferenz zwischen dem vorgewählten Zielgewicht und dem Gewicht der ersten Menge; und

—mehreren mit den Steuermitteln (16) verbundenen sekundären Wägemaschinen (2) zum Halten jeweiliger Mengen zu wägender Artikel;

—wobei die Steuermittel (16) derart betreibbar sind, daß sie jeweilige von den sekundären Wägemaschinen (2) gelieferte Gewichtswerte kombinieren, um eine akzeptable Kombination von sekundären Wägemaschinen (2) zu finden, die ein kombiniertes Artikelgesamtgewicht halten, das der berechneten Gewichtsdifferenz gleich ist oder dieser Gewichtsdifferenz innerhalb voreingestellter Zulässigkeitsgrenzen am nächsten ist, und wobei die Ausgabemittel (6 bis 9) derart betreibbar sind, daß sie die Ausgabe der von den sekundären Wägemaschinen (2) der akzeptablen Kombination gehaltenen Artikel veranlassen, um dadurch eine zweite Artikelmenge zu bilden, wobei die erste und die zweite Artikelmenge durch die Ausgabemittel (6 bis 9) zusammengebracht werden, um so eine ausgewählte Artikelcharge zu bilden, die im wesentlichen des vorgewählte Zielgewicht hat;

dadurch gekennzeichnet, daß

die Ausgabemittel (6 bis 9) derart betreibbar sind, daß sie Artikel entweder über einen Auswahl-Ausgabeweg (9a) oder einen Zurückweisungs-Ausgabeweg (9b) ausgeben, wobei die Steuermittel (16) derart betreibbar sind, daß sie, wenn eine solche akzeptable Kombination nicht gefunden wurde, die erste aus der primären Wägemaschine (1) ausgegebene Artikelmenge zurückzuweisen und veranlassen, daß die zurückgewiesene Menge von den Ausgabemitteln (6 bis 9) über deren Zurückweisungs-Ausgabeweg (9b) ausgegeben wird.

2. Vorrichtung nach Anspruch 1, bei der die zurückgewiesene Artikelmenge zu Zuführmitteln (A', B') der Vorrichtung zum Zuführen von Artikeln zu der primären Wägemaschine (1) und den mehreren sekundären Wägemaschinen (2) zurückgeführt wird.

3. Vorrichtung nach Anspruch 1 oder 2, ferner mit einer weiteren primären Wägemaschine (1), die der primären Wägemaschine von Anspruch 1 benachbart angeordnet ist, und einem primären Sammelbehälter (3), der derart angeordnet ist, daß er in der Lage ist, den primären Wägemaschinen (1) abwechselnd jeweilige Mengen zu wägender Artikel zuzuführen, und ferner mit mehreren sekundären Sammelbehältern (4), deren Zahl gleich der Hälfte der mehreren sekundären Wägemaschinen (2) ist, wobei jeder sekundäre Sammelbehälter (4) derart angeordnet ist, daß er in der Lage ist, den sekundären Wägemaschinen (2) eines entsprechenden Paares dieser Wägemaschinen abwechselnd jeweilige Artikelmengen zuzuführen.

4. Vorrichtung nach Anspruch 3, bei der die Steuermittel (16) derart betreibbar sind, daß gewährleistet ist, daß jede akzeptable Kombination nur eine sekundäre Wägemaschine (2) jedes Paares umfaßt.

5. Vorrichtung nach Anspruch 3, bei der die Steuermittel (6) derart betreibbar sind, daß sie feststellen, ob beide sekundären Wägemaschinen (2) eines Paares Teil der in einem Wägezyklus gefundenen akzeptablen Kombination waren, und daß sie im nächsten Wägezyklus eine Null-Punkt-Einstellung einer der sekundären Wägemaschinen (2) dieses Paares veranlassen, während die andere Wägemaschine (2) dieses Paares in der Auswahleiner akzeptablen Kombination verwendet wird.

6. Vorrichtung nach einem der vorhergehenden Ansprüche, bei der die Steuermittel (16) derart betreibbar sind, daß gewährleistet ist, daß die Zahl der sekundären Wägemaschinen (2) in jeder akzeptablen Kombination in einen vorgewählten Zahlenbereich fällt.

7. Vorrichtung nach Anspruch 6, bei der die Steuermittel (16) derart betreibbar sind, daß gewährleistet ist, daß die Zahl der sekundären Wägemaschinen (2) in jeder akzeptablen Kombination im wesentlichen gleich der Hälfte der Zahl der sekundären Wägemaschinen (2) ist, aus der diese Kombination ausgewählt wurde.

8. Vorrichtung nach einem der vorhergehenden Ansprüche, bei der die Steuermittel (16) derart betreibbar sind, daß gewährleistet ist, daß der oder jeder primären Wägemaschine (1) eine im wesentlichen konstante Artikelmenge zum Auswägen durch diese zugeführt wird, und die Steuermittel ferner derart betreibbar sind, daß sie die Zufuhr von Artikeln zu den mehreren sekundären Wägemaschinen (2) derart steuern, daß die Zahl der sekundären Wägemaschinen (2), die Teil akzeptabler Kombinationen sind, in einen weiteren vorgewählten Zahlenbereich fällt.

9. Vorrichtung nach einem der vorhergehenden Ansprüche, bei der die Steuermittel (16) über eine vorbestimmte Anzahl von Wägezyklen derart betreibbar sind, daß sie die Gesamtzahl der sekundären Wägemaschinen (2) zählen, die Teil akzeptabler Kombinationen waren, um dadurch die Durchschnittszahl der sekundären Wägemaschinen (2) festzustellen, die während der vorbestimmten Zahl von Wägezyklen Teil akzeptabler Kombinationen waren, und daß sie die Zufuhr von Artikeln zu der oder jeder primären Wägemaschine (1) in Abhängigkeit von dieser Durchschnittszahl steuern.

10. Vorrichtung nach einem der vorhergehenden Ansprüche, ferner mit Zielgewicht-Einstellmitteln (18), die mit den Steuermitteln (16) verbunden sind, wodurch das Zielgewicht eingestellt werden kann, bei der die Steuermittel (16) derart betreibbar sind, daß sie die Zufuhr von Artikeln zu der oder jeder primären Wägemaschine (1) in Abhängigkeit von dem vorherrschenden Zielgewicht steuern.

Revendications

1. Appareil de pesage pour effectuer de manière répétée un cycle de pesage, afin de fournir des lots sélectionnés respectifs d'articles appareil qui comprend:

une machine de pesage primaire (1) pour peser une première quantité d'articles telle que cette quantité possède un poids inférieur à un poids visé présélectioné,

des moyens de déchargement (6 à 9) pour effectuer le déchargement de ladite première quantité à partir de ladite machine de pesage primaire (1),

des moyens de commande (16), reliés à ladite machine de pesage primaire (1) et auxdits moyens de déchargement (6 à 9), pour calculer la différence de poids entre ledit poids visé présélectionné et le poids de ladite première quantité, et

plusieurs machines de pesage secondaires (2), reliées auxdits moyens de commande (16), pour contenir des quantités respectives d'articles à peser,

lesdits moyens de commande (16) pouvant agir pour combiner des valeurs de poids de quantité respectives fournies par lesdites machines de pesage secondaires (2), en vue de trouver une combinaison acceptable de machines de pesage secondaires (2) contenant un poids combiné total d'articles égal à la différence de poids calculée, ou le plus proche de cette différence de poids dans des limites admissibles prédéterminées, et lesdits moyens de déchargement (6 à 9) pouvant agir pour effectuer le déchargement des articles contenus dans les machines de pesage secondaires (2) de la combinaison acceptable, en vue de constituer ainsi une deuxième quantité d'articles, lesdites première et deuxième quantités d'articles étant réunies par lesdits moyens de déchargement (6 à 9), de manière à constituer un lot d'articles sélectionné, présentant pratiquement le poids visé présélectionné,

caractérisé par le fait que les moyens de déchargement (6 à 9) peuvent agir pour décharger les articles par l'intermédiaire soit d'un chemin (9a) de déchargement de sélection soit d'un chemin (9b) de déchargement de rejet, lesdits moyens de commande (16) pouvant agir, dans le cas où une telle combinaison acceptable ne peut pas être trouvée, pour rejeter ladite première quantité d'articles déchargée à partir de ladite machine de pesage primaire (1) et pour faire que la quantité rejetée soit déchargée par lesdits moyens de déchargement (6 à 9) par l'intermédiaire dudit chemin (9b) de déchargement de rejet de ces moyens.

2. Appareil selon la revendication 1, dans lequel ladite quantité rejetée d'articles est renvoyée aux moyens d'approvisionnement (A', B') de l'appareil pour la fourniture d'articles à ladite machine de pesage primaire (1) et auxidites machines de pesage secondaires (2).

3. Appareil selon la revendication 1 ou 2, comprenant en outre une autre machine de pesage primaire (1), adjacente à la machine de pesage primaire de la revendication 1, et une trémie de réserve primaire (3) disposée de manière à pouvoir fournir des quantités respectives d'articles à peser alternativement auxdites machines de pesage primaires (1), et comprenant en outre également plusieurs trémies de réserves secondaires (4), dont le nombre est égal à la moitié de celui des machines de pesage secondaires (2), chaque trémie de réserve secondaire (4) étant disposée de manière à pouvoir fournir des quantités respectives d'articles alternativement aux machines de pesage secondiare (2) d'une paire correspondante de telles machines de pesage.

4. Appareil selon la revendication 3, dans lequel lesdits moyens de commande (16) peuvent agir pour assurer que chaque combinaison acceptable ne comprenne qu'une seule machine de pesage secondaire (2) de chaque paire.

5. Appareil selon la revendication 3, dans lequel lesdits moyens de commande (16) peuvent agir pour déterminer si les deux machines de pesage secondaires (2) d'une paire ont participé à la combinaison acceptable trouvée aur cours d'un cycle de pesage et pour provoquer un réglage au point zéro de l'une des machines de pesage secondaires (2) de cette paire dans le cycle de pesage suivant, tandis que l'autre machine de pesage (2) de cette paire est utilisée dans la sélection d'une combinaison acceptable.

6. Appareil selon l'une quelconque des revendications précédentes, dans lequel lesdits moyens de commande (16) peuvent agir pour assurer que le nombre de machines de pesage secondaires (2) dans chaque combinaison acceptable se trouve dans une plage de nombres présélectionnée.

7. Appareil selon la revendication 6, dans lequel lesdits moyens de commande (16) peuvent agir pour assurer que le nombre de machines de pesage secondaires (2) dans chaque combinaison acceptable est égal à pratiquement la moitié du nombre de machines de pesage secondaires (2) à partir desquelles a été sélectionnée cette combinaison.

8. Appareil selon l'une quelconque des revendications précédentes, dans lequel les moyens de commande (16) peuvent agir pour assurer qu'une quantité d'articles pratiquement constante est fournie à la machine de pesage primaire (1) ou à chacune de ces machines en vue d'un pesage par celles-ci, et peuvent en outre agir pour commander la fourniture d'articles auxdites plusieurs machines de pesage secondaires (2), de telle manière que le nombre de machines de pesage secondaires (2) participant à des combinaisons acceptables se trouve dans une autre plage de nombres présélectionnée.

9. Appareil selon l'une quelconque des revendications précédentes, dans lequel lesdits moyens de commande (16) peuvent agir, pendant un nombre prédéterminé de cycles de pesage, pour compter le nombre total de machines de pesage secondaires (2) ayant participé à des combinaisons acceptables, afin de déterminer ainsi le nombre moyen de machines de pesage secondaires (2) ayant participé à des combinaisons acceptables, pendant ledit nombre prédéterminé de cycles de pesage, et pour commander la fourniture d'articles à la machine de pesage primaire (1) ou à chacune de ces machines, en fonction de ce nombre moyen.

10. Appareil selon l'une quelconque des revendications précédentes, comprenant en outre des moyens (18) de réglage du poids visé, reliés auxdits moyens de commande (16), par lesquels peut être ajusté ledit poids visé, lesdits moyens de commande (16) pouvant agir pour commander la fourniture d'articles à la machine de pesage primaire (1) ou à chacune de ces machines, en fonction du poids visé du moment.

# Fig. 1

A' PRIMARY SUPPLYING DEVICE

B' SECONDARY SUPPLYING DEVICE

PRIMARY WEIGHING MACHINES

ARTICLE mb

ARTICLE ma

DIRECTION OF TRAVEL

PACKAGING MACHINE

EP 0 171 295 B1

# Fig. 2

SHUTTER WIDTH CHANGING DRIVER — 13

PRIMARY SHUTTER DRIVER — 11

PRIMARY GATE DRIVER — 3′

PRIMARY WEIGHING MACHINE — 1

PRIMARY WEIGHING MACHINE — 1

MULTIPLEXER — 14

A/D CONVERTER — 15

ARITHMETIC CONTROL UNIT — 16

MEMORY

UPPER LIMIT WEIGHT SETTING UNIT — 17

TARGET WEIGHT SETTING UNIT — 18

SECONDARY SHUTTER DRIVER — 12

SECONDARY GATE DRIVER — 4′

SECONDARY WEIGHING MACHINE — 2

SECONDARY WEIGHING MACHINE — 2

TIMING SIGNAL

DISTRIBUTION HOPPER DRIVER — 9′

SECONDARY SHUTTER DRIVER — 12

SECONDARY GATE DRIVER — 4′

SECONDARY WEIGHING MACHINE — 2

SECONDARY WEIGHING MACHINE — 2

TIMING HOPPER DRIVER — 6′

CONVEYOR DRIVER — 8′

PACKAGING MACHINE — 10

EP 0 171 295 B1

# Fig.3

PRIMARY WEIGHT MEMORY PM

(A)  | PM₁ | PM₂ |

ACCEPTABLE/UNACCEPTABLE FLAG MEMORY

(B)  | FM₁ | FM₂ | FM₃ | - - - - | FMm |

TIMING HOPPER    BUCKET CONVEYOR    DISTRIBUTION HOPPER

(C)  | C₁ |    DISCHARGE OCCURRENCE COUNTER MEMORY

(D)  | C₂ |    DISCHARGE OCCURRENCE COUNTER MEMORY

(E)  | DM |    DISCHARGING SECONDARY WEIGHING MACHINE TOTALING MEMORY

(F)  | BM |    PRIMARY SUPPLY CHANGE FLAG MEMORY

# Fig.4 (a)

```
                    (A)
                     │
          ┌──────────┴──────────┐  ──P.1
     NO   <    TIMING SIGNAL    >
    ┌─────<                     >
    │      └──────────┬──────────┘
    │                YES
    │      ┌──────────┴──────────────────────┐  ──P2
    │      │ SHIFT PRIMARY WEIGHT MEMORY PM BY 1 │
    │      └──────────┬──────────────────────┘
    │                 │
    │      ┌──────────┴──────────────────────┐  ──P3
  (※1)    │ STORE WEIGHT OF PRIMARY WEIGHING   │
    │      │ MACHINE HAVING NOT DISCHARGED      │
    │      │ ARTICLES PREVIOUSLY IN MEMORY PM1  │
    │      └──────────┬──────────────────────┘
    │                 │
    │      ┌──────────┴──────────────────────┐  ──P4
    │      │ STORE WEIGHTS OF SECONDARY WEIGHING │
    │      │ MACHINES SUCCESSIVELY              │
    │      └──────────┬──────────────────────┘
    │                 │
    │      ┌──────────┴──────────────────────┐  ──P5
    │      │ COMPUTE COMBINATORIAL TARGET WEIGHT │
    │      │ OF SECONDARY WEIGHING MACHINES     │
    │      └──────────┬──────────────────────┘
```

- P.1 TIMING SIGNAL — NO / YES
- P2 SHIFT PRIMARY WEIGHT MEMORY PM BY 1
- ※1 P3 STORE WEIGHT OF PRIMARY WEIGHING MACHINE HAVING NOT DISCHARGED ARTICLES PREVIOUSLY IN MEMORY PM1
- P4 STORE WEIGHTS OF SECONDARY WEIGHING MACHINES SUCCESSIVELY
- P5 COMPUTE COMBINATORIAL TARGET WEIGHT OF SECONDARY WEIGHING MACHINES

P6 — ARE PAIRED SECONDARY WEIGHING MACHINES HAVING DISCHARGED ARTICLES ? — NO / YES

**P8** — EFFECT COMBINATORIAL OPERATION WITH SECONDARY WEIGHING MACHINES EXCEPT PAIRED SECONDARY WEIGHING MACHINES, AND FIND ONE WEIGHT COMBINATION EQUAL TO TARGET WEIGHT IN UPPER LIMIT WEIGHT DEVIATION OR LARGER THAN AND CLOSEST TO TARGET WEIGHT

**P7** — EFFECT COMBINATORIAL OPERATION WITH NO PAIRED SECONDARY WEIGHING MACHINES INVOLVED AND ONE PAIR OF SECONDARY WEIGHING MACHINES INVOLVED, AND FIND ONE WEIGHT COMBINATION EQUAL TO TARGET WEIGHT IN UPPER LIMIT WEIGHT DEVIATION OR LARGER THAN AND CLOSEST TO TARGET WEIGHT

※1

## Fig. 4 (b)

```
                                    * 1
                                     │
                              ┌──────┴──────┐
                        YES   │ IS CHANGE FLAG │  P9
        ┌──────────────────── │   BM HIGH?    │
        │                     └──────┬──────┘
   ┌────┴────────────┐               │ NO
   │ INCREMENT COUNTER│  P19          │
   │ C2 BY 1         │         ┌──────┴──────────────┐
   └────┬────────────┘    NO   │ ACCEPTABLE WEIGHT    │  P10
        │            ┌───────── │ COMBINATION FOUND ? │
   ┌────┴────┐       │         └──────┬──────────────┘
YES│COUNTER C2=3?│ P20 │                │ YES
   └────┬────┘       │      ┌──────────┴────────────────────────┐
        │ NO         │      │ ADD NUMBER OF SELECTED SECONDARY   │  P11
        │            │      │ WEIGHING MACHINES TO TOTAL MEMORY DM│
 ┌──────┴──────────┐ │      └──────────┬────────────────────────┘
 │CLEAR COUNTER C1 │ │                 │
 │AND TOTAL MEMORY │ │      ┌──────────┴────────┐
P21 DM TO ZERO     │ │      │ INCREMENT COUNTER C1│  P12
 └──────┬──────────┘ │      │ BY 1               │
        │            │      └──────────┬────────┘
 ┌──────┴──────────┐ │                 │
 │MAKE CHANGE FLAG │ │      ┌──────────┴────────┐  P13
 │BM LOW           │ │      │ COUNTER C1= 6 ?   │────── YES
 └──────┬──────────┘ │      └──────────┬────────┘
P22                  │                 │ NO
```

Boxes / labels:
- P9: IS CHANGE FLAG BM HIGH?
- P19: INCREMENT COUNTER C2 BY 1
- P20: COUNTER C2= 3 ?
- P21: CLEAR COUNTER C1 AND TOTAL MEMORY DM TO ZERO
- P22: MAKE CHANGE FLAG BM LOW
- P10: ACCEPTABLE WEIGHT COMBINATION FOUND ?
- P11: ADD NUMBER OF SELECTED SECONDARY WEIGHING MACHINES TO TOTAL MEMORY DM
- P12: INCREMENT COUNTER C1 BY 1
- P13: COUNTER C1= 6 ?
- P14: DM/C1=3.2-3.8  (3.2~3.8, DM/C1 < 3.2, DM/C1 > 3.8)
- P15: CLEAR COUNTER C1 AND TOTAL MEMORY DM TO ZERO
- P17: ISSUE SIGNAL TO REDUCE PRIMARY SHUTTER WIDTH
- P16: ISSUE SIGNAL TO INCREASE PRIMARY SHUTTER WIDTH
- P18: MAKE CHANGE FLAG BM HIGH, AND CLEAR COUNTER C2 TO ZERO

B

# Fig.4 (c)

Ⓑ

P23
HAVE PAIRED SECONDARY
WEIGHING MACHINES DISCHARGED
ARTICLES ON PRECEDING CYCLE?

NO ← → YES

P24
EFFECT ZERO-POINT ADJUSTMENT
ON ONE OF THE PAIRED
SECONDARY WEIGHING MACHINES
WHICH HAS NOT BEEN SUPPLIED
WITH ARTICLES'

P25
SHIFT ACCEPTABLE/UNACCEPTABLE FLAG
MEMORY FM BY 1

P26
STORE DATA OF ACCEPTABLE OR
UNACCEPTABLE WEIGHT IN
MEMORY FM1

NO ← IS FLAG MEMORY FMm HIGH? → YES
P27

P29
ISSUE SIGNAL TO OPEN
SECOND GATE
OF DISTRIBUTION HOPPER

P28
ISSUE SIGNAL TO OPEN
FIRST GATE OF
DISTRIBUTION HOPPER

P30
ISSUE SIGNAL TO OPEN TIMING
HOPPER

P31
ISSUE SIGNAL TO OPEN PRIMARY
WEIGHING HOPPER STORED IN
STEP P3

P32
ISSUE SIGNAL TO OPERATE
PRIMARY SHUTTER A β

P33
NO ← IS FLAG MEMORY FM1 HIGH? →
YES

P34
ISSUE SIGNAL TO OPEN
SECONDARY WEIGHING MACHINES
ACCORDING TO ACCEPTABLE
COMBINATION

P35
ISSUE SIGNAL TO OPEN GATE
3a OR 3B OF PRIMARY POOL
HOPPER

P36
ISSUE SIGNAL TO SHIFT
BUCKET CONVEYOR BY ONE
INTERVAL

P37
ISSUE SIGNAL TO OPEN GATE
4a OR 4B OF SECONDARY POOL
HOPPER

P38
ISSUE SIGNAL TO ACTUATE
SECONDARY SHUTTERS β
CORRESPONDING TO SECONDARY
POOL HOPPER WITH GATES OPEN

P39
ISSUE SIGNAL TO OPEN
SECONDARY SHUTTERS α
ASSOCIATED WITH SECONDARY
SHUTTERS β

ISSUE SIGNAL TO ACTUATE
PRIMARY SHUTTER A α

P40

Ⓐ

6

# Fig. 5

S1 — SET TARGET WEIGHT WT

S2 — EMPTY PRIMARY WEIGHING HOPPERS AND PRIMARY POOL HOPPER

S3 — MOVE PRIMARY SHUTTER Aα TO PRIMARY SHUTTER Aβ

S4 — MOVE PRIMARY SHUTTER Aα PRESCRIBED PITCHES TO INCREASE SHUTTER WIDTH

S5 — VERTICALLY MOVE PRIMARY SHUTTERS Aβ, Aα AND OPEN GATE 3a TO CHARGE ARTICLES INTO PRIMARY WEIGHING HOPPER 1a

S6 — VERTICALLY MOVE PRIMARY SHUTTERS Aβ, Aα AND OPEN GATE 3b TO CHARGE ARTICLES INTO PRIMARY WEIGHING HOPPER 1b

S7 — COMPUTE AVERAGE WEIGHT Wab OF WEIGHTS FROM BOTH PRIMARY WEIGHING MACHINES

S8 — COMPUTE WEIGHT Wp PER PITCH OF SHUTTER WIDTH

S9 — We=WT-(Wc+Wab)

S10 — COMPUTE P=We/Wp AND ROUND P TO GET P'

P';number of pitches corresponding to We

S11 P'

P'≦-1

P'≧1

P'=0

(We<0 WT<(Wc+Wab)]

[We>0,WT>(Wc+Wab)]

MOVE PRIMARY SHUTTER Aα P' PITCHES TO REDUCE SHUTTER WIDTH — S13

MOVE PRIMARY SHUTTER Aα P' PITCHES TO INCREASE SHUTTER WIDTH — S12

END

Aα · Aβ · TR

Aα · Aβ · TR

# Fig. 6

A MASS SUPPLYING SECTION

B BIT SUPPLYING SECTION

b
ALIGNING TROUGH

c
WEIGHING HOPPER

a
OUTLET

d

PACKAGING
MACHINE